# EUROPEAN PATENT APPLICATION

(11) **EP 4 116 940 A2**
(43) Date of publication of application: **11.01.2023**
(21) Application number: 22203831.7
(22) Date of filing: 26.10.2022
(51) Int. Cl.: G06V 10/26, G06V 10/82, G06V 20/64, G06V 20/56

(54) **METHOD AND APPARATUS FOR PROCESSING IMAGE, ELECTRONIC DEVICE AND STORAGE MEDIUM**

(30) Priority: 29.10.2021 CN 202111272463
(71) Applicant: Beijing Baidu Netcom Science Technology Co., Ltd., Beijing 100085 (CN)
(72) Inventor: LI, Yingying, Beijing, 100085 (CN); TAN, Xiao, Beijing, 100085 (CN); SUN, Hao, Beijing, 100085 (CN)
(74) Representative: Maiwald GmbH

(57) **Abstract**

A method for processing an image includes: obtaining (101) an image to be processed; obtaining (102) a depth feature map by inputting the image to be processed into a depth feature extraction network in an image recognition model, and obtaining a semantic segmentation feature map by inputting the image to be processed into a semantic feature extraction network of the image recognition model; obtaining (103) a target depth feature map fused with semantic features and a target semantic segmentation feature map fused with depth features by inputting the depth feature map and the semantic segmentation feature map into a feature interaction network of the recognition model for fusion; and obtaining (104) a depth estimation result and a semantic segmentation result by inputting the target depth feature map and the target semantic segmentation feature map into a corresponding output network in the recognition model.

## Description

### TECHNICAL FIELD

The disclosure relates to a field of artificial intelligence (AI) technologies, specifically to computer vision and deep learning technology, and particularly to a method and an apparatus for processing an image, an electronic device and a storage medium.

### BACKGROUND

Obtaining an image segmentation result and a depth recognition result by processing an acquired image is relatively important to the further analysis of a service scene. For example, in an intelligent driving scene, a road condition analysis can be performed based on the image segmentation result and the depth recognition result, which may improve driving security, reduce congestion and enhance traffic efficiency.

### SUMMARY

A method and an apparatus for processing an image, an electronic device and a storage medium are provided in the disclosure.

According to one aspect of the disclosure, a method for processing an image is provided. The method includes: obtaining an image to be processed; obtaining a depth feature map by inputting the image to be processed into a depth feature extraction network of a recognition model, and obtaining a semantic segmentation feature map by inputting the image to be processed into a semantic feature extraction network of the recognition model; obtaining a target depth feature map fused with semantic features and a target semantic segmentation feature map fused with depth features by inputting the depth feature map and the semantic segmentation feature map into a feature interaction network of the recognition model for fusion; and obtaining a depth estimation result and a semantic segmentation result by inputting the target depth feature map and the target semantic segmentation feature map into a corresponding output network of the recognition model.

According to another aspect of the disclosure, an apparatus for processing an image is provided. The apparatus includes: an obtaining module, configured to obtain an image to be processed; a feature extraction module, configured to obtain a depth feature map by inputting the image to be processed into a depth feature extraction network of a recognition model, and obtain a semantic segmentation feature map by inputting the image to be processed into a semantic feature extraction network of the recognition model; a fusion module, configured to obtain a target depth feature map fused with semantic features and a target semantic segmentation feature map fused with depth features by inputting the depth feature map and the semantic segmentation feature map into a feature interaction network of the recognition model for fusion; and an output module, configured to obtain a depth estimation result and a semantic segmentation result by inputting the target depth feature map and the target semantic segmentation feature map into a corresponding output network of the recognition model.

According to yet another aspect of the disclosure, an electronic device is provided. The electronic device includes: at least one processor; and a memory communicatively connected to the at least one processor. The memory is stored with instructions executable by the at least one processor, to cause the at least one processor to perform the blocks of the method as described in the above aspect of the disclosure.

According to still yet another aspect of the disclosure, a non-transitory computer readable storage medium stored with computer instructions is provided. The computer instructions are configured to cause a computer to perform the blocks of the method as described in the above aspect.

According to still yet another aspect of the disclosure, a computer program product including a computer program is provided. The computer program achieves the blocks of the method as described in the above any aspect when performed by a processor.

It is understandable that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for processing an image according to embodiments of the disclosure.
FIG. 2 is a flowchart illustrating another method for processing an image according to embodiments of the disclosure.
FIG. 3 is a flowchart illustrating another method for processing an image according to embodiments of the disclosure.
FIG. 4 is a flowchart illustrating another method for processing an image according to embodiments of the disclosure.
FIG. 5 is a block diagram illustrating an apparatus for processing an image according to embodiments of the disclosure.
FIG. 6 is a block diagram illustrating an electronic device according to embodiments of the disclosure.

### DETAILED DESCRIPTION

The embodiments of the disclosure are described as below with reference to the accompanying drawings, which include various details of embodiments of the disclosure to facilitate understanding, and should be considered as merely examples. Therefore, those skilled in the art should realize that various changes and modifications may be made to the embodiments described herein without departing from the scope and spirit of the disclosure. Similarly, for clarity and conciseness, descriptions of well-known functions and structures are omitted in the following descriptions.

A method and an apparatus for processing an image, an electronic device and a storage medium according to embodiments of the disclosure will be described below with reference to attached drawings.

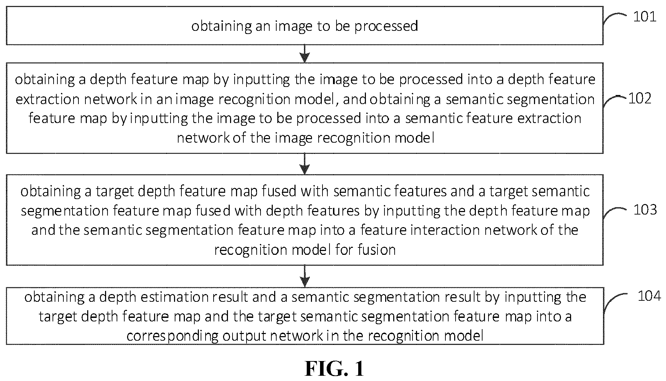

FIG. 1 is a flowchart illustrating a method for processing an image according to embodiments of the disclosure.

As illustrated in FIG. 1, the method may include the following blocks.

At block 101, an image to be processed is acquired.

The method for processing an image according to embodiments of the disclosure is performed by an apparatus for processing an image. The apparatus may be included in an electronic device. The electronic device may be a mobile phone, a wearable device, a vehicle or a vehicle-mounted device, etc.

The image to be processed refers to an image on which the depth recognition and the image segmentation need to be performed.

The acquisition, storage, and application of the user personal information involved in the technical solution of the disclosure comply with relevant laws and regulations, and do not violate public order and good customs.

At block 102, a depth feature map is obtained by inputting the image to be processed into a depth feature extraction network of a recognition model, and a semantic segmentation feature map is obtained by inputting the image to be processed into a semantic feature extraction network of the recognition model.

The recognition model mentioned in embodiments of the disclosure is a dual-branch multi-task model. One branch is configured to perform depth feature extraction on the image to be processed, and the other is configured to perform semantic segmentation feature extraction on the image to be processed. The dual-branch multi-task model is, for example, a perception-aided single image dehazing network (PAD-NET) or a multi-scale task interaction network (MTI-NET). The elements of the depth feature map are configured to indicate depth features of corresponding pixels of the image to be processed respectively. The elements of the semantic segmentation feature map are configured to indicate semantic segmentation features of corresponding pixels of the image to be processed respectively, and the pixels with the identical semantic segmentation feature may belong to the same object.

At block 103, a target depth feature map fused with semantic features and a target semantic segmentation feature map fused with depth features are obtained by inputting the depth feature map and the semantic segmentation feature map into a feature interaction network of the recognition model for fusion.

Through the semantic segmentation, depths of a part of an image belonging to the same category are relatively smooth, and the segmentation category changes at edges of this part, such that there is a jump in depths of this part, i.e., the depths of this part change greatly (for example, the change amount is greater than a threshold). Therefore, there is a correlation between the segmentation features and the depth features. A feature interaction network is added in the image recognition model, where the feature interaction network is configured to fuse the depth features in the depth feature map and the semantic features in the semantic segmentation feature map, and the target depth feature map fused with the semantic features and the target semantic segmentation feature map fused with the depth features are obtained. In this way, a better feature expression can be achieved through learning based on the correlation between these two tasks, to improve the effect of the subsequently outputted depth result and semantic segmentation result.

At block 104, a depth estimation result and a semantic segmentation result are obtained by inputting the target depth feature map and the target semantic segmentation feature map into a corresponding output network of the recognition model.

The target depth feature map fused with the semantic segmentation feature is input into a corresponding output network of the image recognition model. Since in the target depth feature map, the depth features are fused with the semantic segmentation features, the accuracy of the obtained depth estimation result is improved based on the multimodal features. The target semantic segmentation feature map fused with the depth features is input into the corresponding output network of the image recognition model. Since in the target semantic segmentation feature map, the features are fused with the depth features, the accuracy of the obtained semantic segmentation result is improved based on the multimodal features.

The depth estimation result and the semantic segmentation result have different functions in different scenes. For example, in an autonomous driving field, the road condition may be recognized based on the depth estimation result and the semantic segmentation result to determine elements of the road, such as lane lines, telegraph poles or the like, to control safe operation of the vehicle. In addition, obstacles around the vehicle and distances between the vehicle and the obstacles can be identified to perform obstacle avoidance processing, which reduces congestion and improves the driving security.

With the method for processing an image according to embodiments of the disclosure, the image to be processed is inputted into the depth feature extraction network of an image recognition model to obtain the depth feature map, the image to be processed is inputted into a semantic feature extraction network of the image recognition model to obtain the semantic segmentation feature map, the depth feature map and the semantic segmentation feature map are inputted to the feature interaction network of the image recognition model for fusing to obtain the target depth feature map fused with the semantic features and the target semantic segmentation feature map fused with the depth features, and the target depth feature map and the target semantic segmentation feature map are inputted into the corresponding output network of the image recognition model to obtain the depth estimation result and the semantic segmentation result. Through the feature interaction network, the feature fusion is performed on the semantic segmentation feature map and the depth feature map to learn a better feature expression based on the correlation between the two tasks, which improves the accuracy of depth estimation and semantic segmentation.

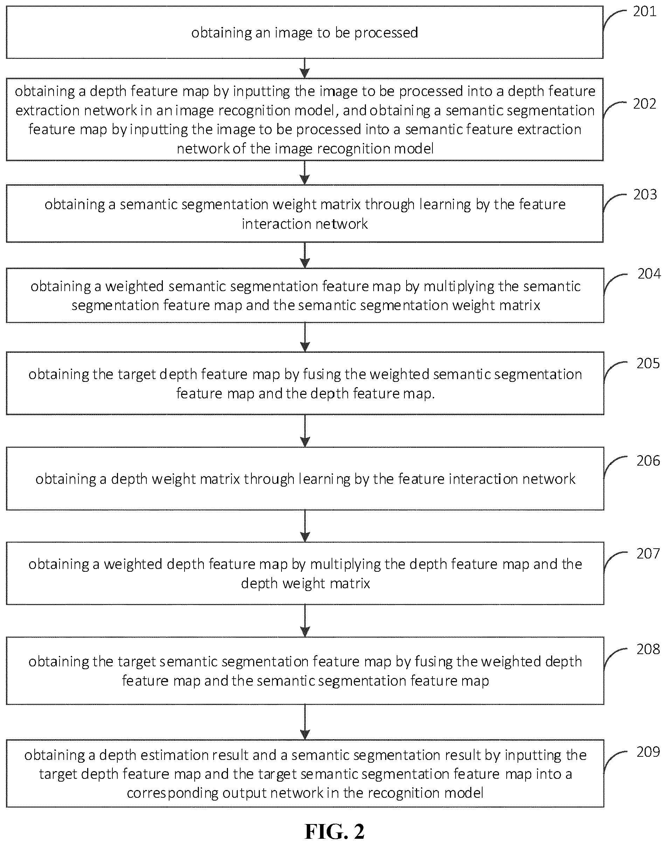

Based on the above embodiments, another method for processing an image is provided. FIG. 2 is a flowchart illustrating another method for processing an image according to embodiments of the disclosure.

As illustrated in FIG. 2, the method may include the following blocks.

At block 201, an image to be processed is acquired.

At block 202, a depth feature map is obtained by inputting the image to be processed into a depth feature extraction network of an image recognition model, and a semantic segmentation feature map is obtained by inputting the image to be processed into a semantic feature extraction network of the image recognition model.

Specifically, block 201 and block 202 may refer to descriptions of the foregoing embodiments and principles are the same, which will not be repeated here.

At block 203, a semantic segmentation weight matrix is obtained through learning by the feature interaction network.

Each element of the semantic segmentation weight matrix is configured to indicate a respective importance degree of a feature of a corresponding element of the semantic segmentation feature map in performing the depth estimation. In other words, the semantic segmentation weight matrix is configured to indicate how many semantic features in the semantic segmentation feature map are transferred to the depth feature map. That is, the semantic segmentation weight matrix is configured to indicate a feature correlation between the semantic segmentation feature map and the depth feature map. As a possible implementation, convolutional layers of the feature interaction network are convolved with the feature map of the semantic segmentation task, and weight parameters are obtained through a sigmoid function. The weight parameters are continuously adjusted in a process of training the image recognition model to obtain the semantic segmentation weight matrix through learning. As an example, the value of each element of the semantic segmentation weight matrix ranges from 0 to 1. The larger the value is, the greater the importance of the feature of the element in performing the depth estimation is, which means that more features need to be transferred to the depth feature map.

At block 204, a weighted semantic segmentation feature map is obtained by multiplying the semantic segmentation feature map and the semantic segmentation weight matrix.

The semantic segmentation feature map and the semantic segmentation weight matrix are multiplied to obtain the weighted semantic segmentation feature map, so that the weighted semantic segmentation feature map may better utilize the correlation between the depth estimation task and the semantic segmentation task.

At block 205, a target depth feature map is obtained by fusing the weighted semantic segmentation feature map and the depth feature map.

As an implementation, the semantic segmentation features in the weighted semantic segmentation feature map and the depth features in the depth feature map are spliced to obtain the target depth feature map, such that the target depth feature map obtained through the splicing not only includes the depth features but also includes the weighted semantic segmentation features, which increases the amount of feature information carried in the target depth feature map.

As another implementation, the semantic segmentation features in the weighted semantic segmentation feature map and the depth features in the depth feature map are added to obtain the target depth feature map, such that the target depth feature map obtained through the adding not only includes the depth features but also includes the weighted semantic segmentation features, which increases the amount of feature information carried in the target depth feature map without adding feature dimensions. Therefore, the computation amount of subsequent recognition is reduced.

At block 206, a depth weight matrix is obtained through learning by the feature interaction network.

Each element of the depth weight matrix is configured to indicate a respective importance degree of a feature of a corresponding element of the depth feature map in performing semantic segmentation. In other words, the depth weight matrix is configured to indicate how many depth features in the depth feature map are transferred to the semantic segmentation feature map. That is, the depth weight matrix is configured to indicate a feature correlation between the semantic segmentation feature map and the depth feature map. As a possible implementation, convolutional layers of the feature interaction network are convolved with the feature map of the depth estimation task, and weight parameters are obtained through a sigmoid function. The weight parameters are continuously adjusted in a process of training the image recognition model to obtain the depth weight matrix through learning. As an example, the value of each element in the depth weight matrix ranges from 0 to 1. The larger the value is, the greater the importance of the feature of the element in performing semantic segmentation is, which means that more features need to be transferred to the semantic segmentation feature map.

At block 207, a weighted depth feature map is obtained by multiplying the depth feature map and the depth weight matrix.

The depth feature map and the depth weight matrix are multiplied to obtain the weighted depth feature map, so that the weighted depth feature map may better utilize the correlation between the depth estimation task and the semantic segmentation task.

At block 208, a target semantic segmentation feature map is obtained by fusing the weighted depth feature map and the semantic segmentation feature map.

As an implementation, the depth features in the weighted depth feature map and the semantic segmentation features in the semantic segmentation feature map are spliced to obtain the target semantic segmentation feature map, such that the target semantic segmentation feature map obtained by the splicing not only includes the semantic segmentation features but also includes the weighted depth features, which increases the amount of the feature information carried in the target semantic segmentation feature map.

As another implementation, the depth features in the weighted depth feature map and the semantic segmentation features in the semantic segmentation feature map are added to obtain the target semantic segmentation feature map, such that the target semantic segmentation feature map obtained through the adding not only includes the semantic segmentation features but also includes the weighted depth features, which increases the amount of the feature information carried in the target semantic segmentation feature map without adding feature dimensions. Therefore, the computation amount of subsequent recognition is reduced.

At block 209, a depth estimation result and a semantic segmentation result are obtained by inputting the target depth feature map and the target semantic segmentation feature map into a corresponding output network of the image recognition model.

Specifically, the block may refer to descriptions of the foregoing embodiments, and the principles are the same, which will not be repeated here.

According to the method for processing an image according to embodiments of the disclosure, through the feature interaction network of the image recognition model, the semantic features and the depth features are weighted respectively through the depth weight matrix and the semantic segmentation weight matrix that are obtained in advance through the learning by the feature interaction network, such that the better feature expression can be achieved by utilizing the correlation between two tasks. In addition, the target depth feature map and the target semantic segmentation feature map are obtained through the feature fusion with the weighted depth features and the weighted semantic segmentation features, which improves the accuracy of the target semantic segmentation feature map and the target depth feature map. Further, the accuracy of the depth estimation and the semantic segmentation is improved based on the target semantic segmentation feature map and the target depth feature map.

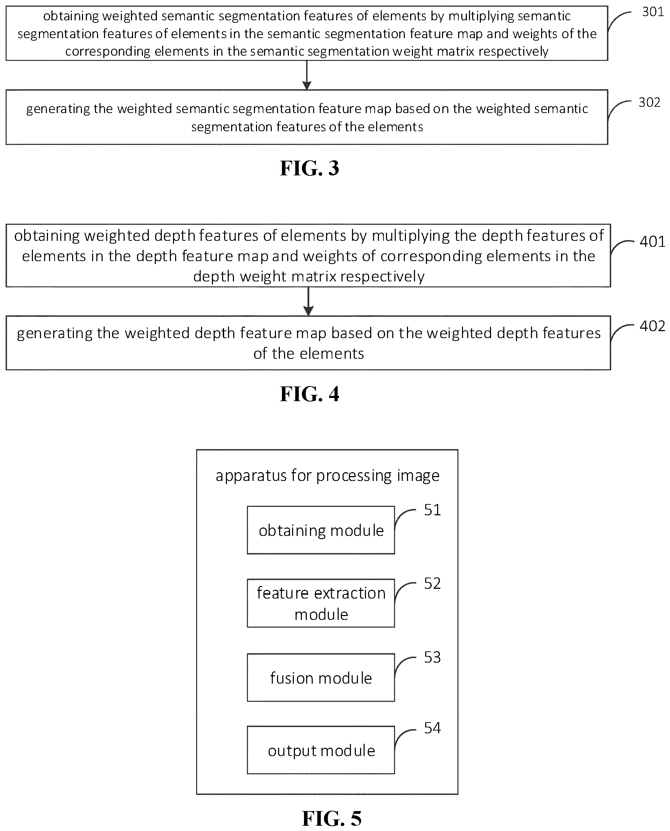

Based on the above embodiments, FIG. 3 is a flowchart illustrating another method for processing an image according to embodiments of the disclosure. As illustrated in FIG. 3, the block 204 includes the following blocks.

At block 301, weighted semantic segmentation features of elements are obtained by multiplying the semantic segmentation features of the elements in the semantic segmentation feature map and weights of corresponding elements in the semantic segmentation weight matrix.

At block 302, a weighted semantic segmentation feature map is generated based on the weighted semantic segmentation features of the elements.

The elements included in the semantic segmentation feature map correspond to the elements included in the semantic segmentation feature matrix one by one and each element included in the semantic segmentation feature map has a correspondence relationship with a pixel or a combination of pixels of the image to be segmented. The semantic segmentation feature of each element in the semantic segmentation feature map and the weight of a corresponding element in the semantic segmentation weight matrix is multiplied to obtain the weighted semantic segmentation feature of each element. In this way, for all elements, the weighted semantic segmentation features are obtained to form the weighted semantic segmentation feature map. The granularity refinement degree of the weighted semantic segmentation feature map is improved. The elements in the weighted semantic segmentation feature map are configured to indicate the correlation between the semantic segmentation features and depth features of the elements in the depth feature map. For example, in the weighted semantic segmentation map, there are more information of the weighted semantic segmentation features at each object edge obtained through the semantic segmentation, which indicates the features of relatively large changes in depths at edges.

With the method for processing an image according to embodiments of the disclosure, the weighted semantic segmentation features of the elements are obtained by multiplying the semantic segmentation features of the elements in the semantic segmentation feature map and the weights of the corresponding elements in the semantic segmentation weight matrix, and the weighted semantic segmentation feature map is generated based on the weighted semantic segmentation features of the elements. Through the weighting of each element, the accuracy of the weighted semantic segmentation feature map is improved.

Based on the above embodiments, FIG. 4 is a flowchart illustrating another method for processing an image according to embodiment of the disclosure. As illustrated in FIG. 4, the block 207 includes the following blocks.

At block 401, the depth feature of pixels in the depth feature map and the weights of the corresponding pixels in the depth weight matrix are multiplied to obtain the weighted depth features of the pixels.

At block 402, a weighted depth feature map is generated based on the weighted depth features of the elements.

The elements included in the depth feature map correspond to the elements included in the depth feature matrix one by one. The depth feature of each element included in the depth feature map is multiplied by the weight of a corresponding element in the depth weight matrix to obtain the weighted depth feature of each element. In this way, for all elements, the weighted depth features are generated to form the weighted depth feature map. The granularity refinement degree of the weighted depth feature map is improved. The elements in the weighted depth feature map are configured to indicate the correlation between the depth features and the semantic segmentation features of the elements in the semantic segmentation feature map. For example, in the weighted depth map, there are more information of the depth features at each object edge obtained through the semantic segmentation, which indicates the features of relatively large changes in depths at edges.

With the method for processing an image according to embodiment of the disclosure, the weighted depth features of the elements are obtained by multiplying the depth features of the elements in the depth feature map and the weights of the corresponding elements in the depth weight matrix, and the weighted depth feature map is generated based on the weighted depth features of the elements. Through the weighting of each element, the accuracy of the weighted depth feature map is improved.

In order to achieve the above embodiments, an apparatus for processing an image is provided.

FIG. 5 is a block diagram illustrating an apparatus for processing an image according to embodiments of the disclosure. As illustrated in FIG. 5, the apparatus includes an obtaining module 51, a feature extraction module 52, a fusion module 53 and an output module 54.

The obtaining module 51 is configured to obtain an image to be processed.

The feature extraction module 52 is configured to obtain a depth feature map by inputting the image to be processed into a depth feature extraction network of an image recognition model, and obtain a semantic segmentation feature map by inputting the image to be processed into a semantic feature extraction network of the image recognition model.

The fusion module 53 is configured to obtain a target depth feature map fused with semantic features and a target semantic segmentation feature map fused with depth features by inputting the depth feature map and the semantic segmentation feature map into a feature interaction network of the image recognition model for fusion.

The output module 54 is configured to obtain a depth estimation result and a semantic segmentation result by inputting the target depth feature map and the target semantic segmentation feature map into a corresponding output network of the image recognition model.

In an implementation, the fusion module 53 is further configured to: obtain a semantic segmentation weight matrix through learning by the feature interaction network; in which elements of the semantic segmentation weight matrix are configured to indicate importance degrees of features, corresponding to respective elements, in the semantic segmentation feature map in performing depth estimation; obtain a weighted semantic segmentation feature map by multiplying the semantic segmentation feature map and the semantic segmentation weight matrix; and obtain the target depth feature map by fusing the weighted semantic segmentation feature map and the depth feature map.

In an implementation, the fusion module 53 is further configured to: obtain a depth weight matrix through learning by the feature interaction network; in which elements of the depth weight matrix are configured to indicate importance degrees of features, corresponding to respective elements, in the depth feature map in performing semantic segmentation; obtain a weighted depth feature map by multiplying the depth feature map and the depth weight matrix; and obtain the target semantic segmentation feature map by fusing the weighted depth feature map and the semantic segmentation feature map.

In an implementation, the fusion module 53 is specifically further configured to: obtain weighted semantic segmentation features of elements by multiplying semantic segmentation features of elements in the semantic segmentation feature map and weights of the corresponding elements in the semantic segmentation weight matrix respectively; and generate the weighted semantic segmentation feature map based on the weighted semantic segmentation features of the elements.

In an implementation, the fusion module 53 is further configured to: obtain weighted depth features of elements by multiplying the depth features of elements in the depth feature map and weights of corresponding elements in the depth weight matrix respectively; and generate the weighted depth feature map based on the weighted depth features of the elements.

It is understandable that, the foregoing explanation of the method embodiment is also applied to an apparatus in the embodiment, with the same principle, which will not be repeated here.

With the apparatus for processing an image in the embodiment of the disclosure, the image to be processed is inputted into the depth feature extraction network of an image recognition model to obtain the depth feature map, the image to be processed is inputted into a semantic feature extraction network of the image recognition model to obtain the semantic segmentation feature map, the depth feature map and the semantic segmentation feature map are inputted to the feature interaction network of the image recognition model for fusing to obtain the target depth feature map fused with the semantic features and the target semantic segmentation feature map fused with the depth features, and the target depth feature map and the target semantic segmentation feature map are inputted into the corresponding output network of the image recognition model to obtain the depth estimation result and the semantic segmentation result. Through the feature interaction network, the feature fusion is performed on the semantic segmentation feature map and the depth feature map to learn a better feature expression based on the correlation between the two tasks, which improves the accuracy of depth estimation and semantic segmentation.

In order to achieve the above embodiments, an electronic device is further provided in the embodiment of the disclosure. The electronic device includes: at least one processor; and a memory communicatively connected to the at least one processor; the memory is stored with instructions executable by the at least one processor, the instructions are performed by the at least one processor to cause the at least one processor to perform the blocks of the method as described in the above method embodiment.

In order to achieve the above embodiment, a non-transitory computer readable storage medium stored with computer instructions is provided in the embodiment of the disclosure. The computer instructions are configured to cause the computer to perform the blocks of the method as described in the above method embodiment.

In order to achieve the above embodiment, a computer program product including a computer program is further provided. The computer program achieves the blocks of the method as described in the above method embodiment when performed by a processor.

According to the embodiment of the disclosure, an electronic device, a readable storage medium and a computer program product are further provided in the disclosure.

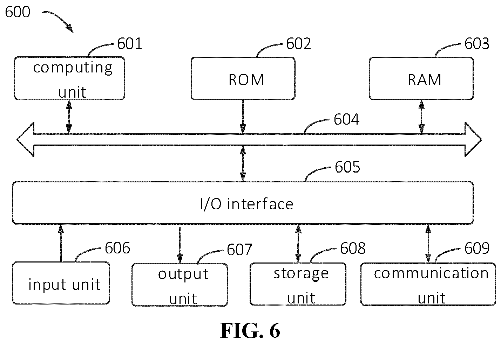

FIG. 6 is a block diagram illustrating an electronic device according to embodiments of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 6, a device 600 includes a computing unit 601, which may be configured to execute various appropriate actions and processes according to a computer program stored in a read-only memory (ROM) 602 or loaded from a storage unit 608 to a random access memory (RAM) 603. In a RAM 603, various programs and data required by an operation of a device 600 may be further stored. A computing unit 601, a ROM 1202 and a RAM 603 may be connected with each other by a bus 604. An input/output (I/O) interface 605 is also connected to a bus 604.

A plurality of components in the device 600 are connected to an I/O interface 605, and includes: an input unit 606, for example, a keyboard, a mouse, etc.; an output unit 607, for example various types of displays, speakers; a storage unit 608, for example a magnetic disk, an optical disk; and a communication unit 609, for example, a network card, a modem, a wireless transceiver. The communication unit 609 allows a device 600 to exchange information/data through a computer network such as internet and/or various types of telecommunication networks and other devices.

The computing unit 601 may be various types of general and/or dedicated processing components with processing and computing ability. Some examples of a computing unit 601 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 601 performs various methods and processings as described above, for example, a method for processing an image. For example, in some embodiments, the method for processing an image may be further achieved as a computer software program, which is physically contained in a machine readable medium, such as a storage unit 608. In some embodiments, a part or all of the computer program may be loaded and/or installed on the device 600 via a ROM 602 and/or a communication unit 609. When the computer program is loaded on a RAM 603 and performed by a computing unit 601, one or more blocks in the above method for processing an image may be performed. Alternatively, in other embodiments, the computing unit 601 may be configured to perform a method for processing an image in other appropriate ways (for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), an application specific standard product (ASSP), a system on a chip (SoC), a complex programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a RAM, a ROM, an electrically programmable read-only memory (an EPROM) or a flash memory, an optical fiber device, and a compact disc read-only memory (CD-ROM), an optical storage device, a magnetic storage device, or any appropriate combination thereof.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may be further configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). The examples of a communication network include a Local Area Network (LAN), a Wide Area Network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

It should be noted that, Artificial intelligence(AI) is a subject that learns simulating certain thinking processes and intelligent behaviors (such as learning, reasoning, thinking, planning, etc.) of human beings by a computer, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing(NLP) technology and machine learning(ML), deep learning(DL), big data processing technology, knowledge graph(KG) technology, etc.

It should be understood that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the spirit and principle of embodiments of the present disclosure shall be included within the protection scope of the present disclosure.

## Claims

1. A method for processing an image, comprising:
obtaining (101; 201) an image to be processed;
obtaining (102; 202) a depth feature map by inputting the image to be processed into a depth feature extraction network in an image recognition model, and obtaining a semantic segmentation feature map by inputting the image to be processed into a semantic feature extraction network of the image recognition model;
obtaining (103) a target depth feature map fused with semantic features and a target semantic segmentation feature map fused with depth features by inputting the depth feature map and the semantic segmentation feature map into a feature interaction network of the recognition model for fusion; and
obtaining (104; 209) a depth estimation result and a semantic segmentation result by inputting the target depth feature map and the target semantic segmentation feature map into a corresponding output network in the recognition model.

2. The method of claim 1, wherein obtaining (103) the target depth feature map fused with the semantic features by inputting the depth feature map and the semantic segmentation feature map into the feature interaction network of the recognition model, comprises:
obtaining (203) a semantic segmentation weight matrix through learning by the feature interaction network; wherein elements of the semantic segmentation weight matrix are configured to indicate importance degrees of features, corresponding to respective elements, in the semantic segmentation feature map in performing depth estimation;
obtaining (204) a weighted semantic segmentation feature map by multiplying the semantic segmentation feature map and the semantic segmentation weight matrix; and
obtaining (205) the target depth feature map by fusing the weighted semantic segmentation feature map and the depth feature map.

3. The method of claim 1, wherein obtaining (103) the target semantic segmentation feature map fused with the depth features by inputting the depth feature map and the semantic segmentation feature map into the feature interaction network of the recognition model comprises:
obtaining (206) a depth weight matrix through learning by the feature interaction network; wherein elements of the depth weight matrix are configured to indicate importance degrees of features, corresponding to respective elements, in the depth feature map in performing semantic segmentation;
obtaining (207) a weighted depth feature map by multiplying the depth feature map and the depth weight matrix; and
obtaining (208) the target semantic segmentation feature map by fusing the weighted depth feature map and the semantic segmentation feature map.

4. The method of claim 2, wherein obtaining (204) the weighted semantic segmentation feature map by multiplying the semantic segmentation feature map and the semantic segmentation weight matrix comprises:
obtaining (301) weighted semantic segmentation features of elements by multiplying semantic segmentation features of elements in the semantic segmentation feature map and weights of the corresponding elements in the semantic segmentation weight matrix respectively; and
generating (302) the weighted semantic segmentation feature map based on the weighted semantic segmentation features of the elements.

5. The method of claim 3, wherein obtaining (207) the weighted depth feature map by multiplying the depth feature map and the depth weight matrix comprises:
obtaining (401) weighted depth features of elements by multiplying the depth features of elements in the depth feature map and weights of corresponding elements in the depth weight matrix respectively; and
generating (402) the weighted depth feature map based on the weighted depth features of the elements.

6. An apparatus for processing an image, comprising:
an obtaining (51) module, configured to acquire an image to be processed;
a feature extraction module (52), configured to obtain a depth feature map by inputting the image to be processed into a depth feature extraction network in an image recognition model, and obtain a semantic segmentation feature map by inputting the image to be processed into a semantic feature extraction network of the image recognition model;
a fusion module (53), configured to obtain a target depth feature map fused with semantic features and a target semantic segmentation feature map fused with depth features by inputting the depth feature map and the semantic segmentation feature map into a feature interaction network of the recognition model for fusion; and
an output module (54), configured to obtain a depth estimation result and a semantic segmentation result by inputting the target depth feature map and the target semantic segmentation feature map into a corresponding output network in the recognition model.

7. The apparatus of claim 6, wherein the fusion module (53) is further configured to:
obtain a semantic segmentation weight matrix through learning by the feature interaction network; wherein elements of the semantic segmentation weight matrix are configured to indicate importance degrees of features, corresponding to respective elements, in the semantic segmentation feature map in performing depth estimation;
obtain a weighted semantic segmentation feature map by multiplying the semantic segmentation feature map and the semantic segmentation weight matrix; and
obtain the target depth feature map by fusing the weighted semantic segmentation feature map and the depth feature map.

8. The apparatus of claim 6, wherein the fusion module (53) is further configured to:
obtain a depth weight matrix through learning by the feature interaction network; wherein elements of the depth weight matrix are configured to indicate importance degrees of features, corresponding to respective elements, in the depth feature map in performing semantic segmentation;
obtain a weighted depth feature map by multiplying the depth feature map and the depth weight matrix; and
obtain the target semantic segmentation feature map by fusing the weighted depth feature map and the semantic segmentation feature map.

9. The apparatus of claim 7, wherein the fusion module (53) is further configured to:
obtain weighted semantic segmentation features of elements by multiplying semantic segmentation features of elements in the semantic segmentation feature map and weights of the corresponding elements in the semantic segmentation weight matrix respectively; and
generate the weighted semantic segmentation feature map based on the weighted semantic segmentation features of the elements.

10. The apparatus of claim 8, wherein the fusion module (53) is further configured to:
obtain weighted depth features of elements by multiplying the depth features of elements in the depth feature map and weights of corresponding elements in the depth weight matrix respectively; and
generate the weighted depth feature map based on the weighted depth features of the elements.

11. An electronic device, comprising:
at least one processor; and
a memory communicatively connected to the at least one processor; wherein,
the memory is stored with instructions executable by the at least one processor, the instructions are performed by the at least one processor, to cause the at least one processor to perform the method of any of claims 1 to 5.

12. A non-transitory computer readable storage medium stored with computer instructions, wherein, the computer instructions are configured to cause a computer to perform the method of any of claims 1 to 5.

13. A computer program product, comprising a computer program, the computer program achieves the method of any of claims 1 to 5 when performed by a processor.
